Europäisches Patentamt

European Patent Office

Office européen des brevets

(11) Publication number: **0 048 144**
**B1**

(12) **EUROPEAN PATENT SPECIFICATION**

(45) Date of publication of patent specification: **20.08.86**

(21) Application number: **81304173.8**

(22) Date of filing: **11.09.81**

(51) Int. Cl.⁴: **G 01 N 23/04**

(54) X-ray photographic inspecting device.

(30) Priority: **12.09.80 JP 126670/80**

(43) Date of publication of application:
**24.03.82 Bulletin 82/12**

(45) Publication of the grant of the patent:
**20.08.86 Bulletin 86/34**

(84) Designated Contracting States:
**DE FR GB IT NL**

(56) References cited:
**FR-A-2 227 791**
**FR-A-2 344 832**
**US-A-3 521 059**

(73) Proprietor: **HOXAN CORPORATION**
**2-Nishi, 1-chome Kita 3-jyo**
**Chuo-ku Sapporo-shi Hokkaido (JP)**

(72) Inventor: **Inomata, Masashi c/o Hoxan**
**Laboratory Hoxan Corp**
**29-banchi, 2-chome, Gojo Kikusui**
**Shiroishi-ku Sapporo-shi Hokkaido (JP)**
Inventor: **Kon, Shizuo c/o Hoxan Laboratory**
**Hoxan Corp**
**29-banchi, 2-chome, Gojo Kikusui**
**Shiroishi-ku Sapporo-shi Hokkaido (JP)**
Inventor: **Kaku, Tsukasa c/o HOxan Laboratory**
**Hoxan Corp**
**29-banchi, 2-chome, Gojo Kikusui**
**Shiroishi-ku Sapporo-chi Hokkaido (JP)**
Inventor: **Shinohara, Shizuo c/o Hoxan**
**Laboratory Hoxan Corp**
**29-banchi, 2-chome, Gojo Kikusui**
**Shiroishi-ku Sapporo-chi Hokkaido (JP)**

(74) Representative: **Crawford, Andrew Birkby et al**
**A.A. THORNTON & CO. Northumberland House**
**303-306 High Holborn**
**London WC1V 7LE (GB)**

EP 0 048 144 B1

## Description

This invention relates to an X-ray photographic inspecting device and, more particularly, to improvements in an X-ray photographic inspecting device for inspecting welds, for example in a large-sized metal gas tank wall or the like.

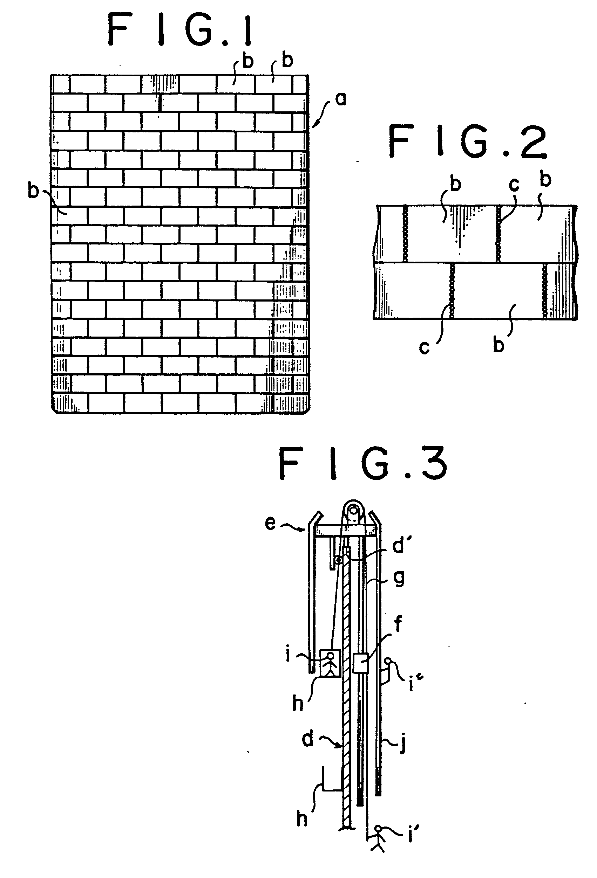

Generally, a large-sized metal gas tank *a* is, as shown in Figures 1 and 2, manufactured by welding together a number of metal plates *b*, in both longitudinal and lateral directions. The integrity of the welds *c* is normally inspected during manufacture of the tank by X-ray photography.

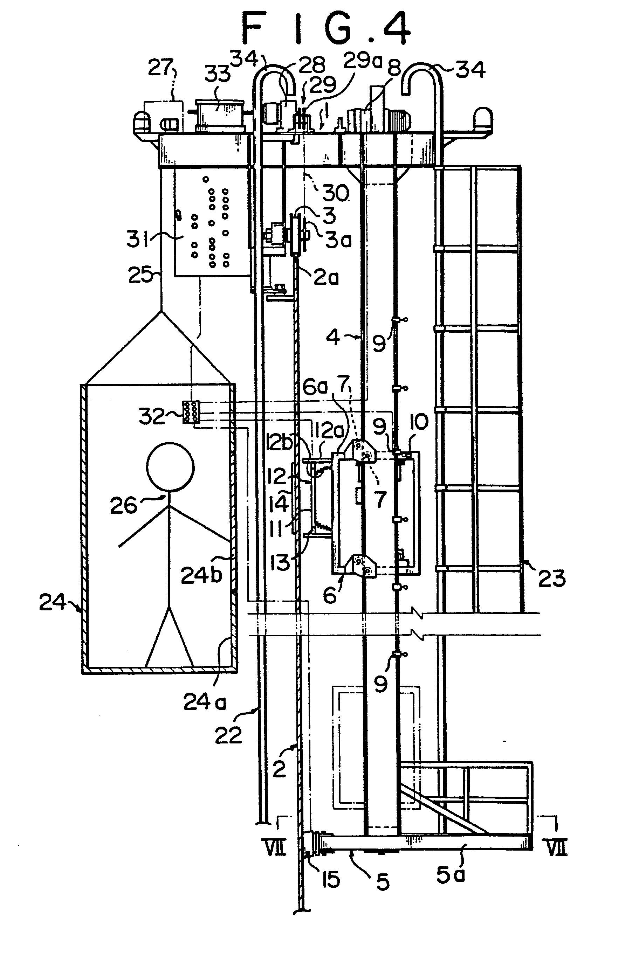

There is heretofore known a conventional X-ray photographic inspecting device as indicated in Figure 3. This device has a body *e* movable along the upper edge *d'* of a wall *d* to be inspected, such as the wall of a tank, an X-ray generator *f* hung by a rope *g* from one side of the surface of the wall *d*, and a gondola *h* installed at the other side of the surface of the wall *d*. A worker or an operator *i* on the gondola *h* adjusts the height of the X-ray generator *f* by pulling the rope *g* and thus positions the X-ray generator *f* at a weld *c* to be inspected. Another worker or operator *i'* on the ground imparts a tension to the rope *g* so that the X-ray generator *f* does not move laterally or rock. In this state, yet another worker or operator *i''* on a ladder *j* vertically suspended from the body *e* takes the X-ray photograph.

According to the above described conventional X-ray photographic inspecting device, the X-ray generator *f* is manually or artificially moved elevationally upwardly or downwardly, positioned and fixed. Accordingly, this device necessitates at least three workers or operators in order to take the X-ray photograph of a weld part to be inspected. In addition, using the above device is dangerous, and the positioning operation of the X-ray generator is inaccurate. Accordingly, errors tend to occur in the inspection results. Further, the above work is very inefficient. Thus, it takes a great deal of labour and time to inspect one large-size tank.

Accordingly, a primary object of this invention is to provide an X-ray photographic inspecting device which can eliminate the aforementioned disadvantages and drawbacks of the conventional X-ray photographic inspecting device and which can be operated by a single worker or operator.

Another object of this invention is to provide an X-ray photographic inspecting device which can automatically position an X-ray generator thereof.

A further object of this invention is to provide an X-ray photographic inspecting device which can accurately and rapidly position the X-ray generator at the welds part to be inspected.

Still another object of this invention is to provide an X-ray photographic inspecting device which can be operated efficiently, thereby saving labour during the inspection.

Still another object of the invention is to provide an X-ray photographic inspecting device which can be operated safely.

The present invention provides an X-ray photographic device for use in inspecting welds in a vertical wall constructed from a plurality of plates which have been welded together along their edges, said device comprising:

a movable assembly provided with means by which said assembly is supported on, and movable along, the upper horizontal edge of said wall;

a generally vertical guide rail extending downwardly from said assembly on one side of said wall;

an X-ray generator arrangement mounted to be movable up and down said guide rail, and suspended from said assembly and comprising an X-ray generator for transmitting a beam of X-rays towards said wall;

a gondola for supporting an operator, said gondola being suspended by cable means from said assembly and being movable vertically with respect thereto, said gondola being on the other side of said wall from the X-ray generator arrangement; and

means for stabilising the position of said X-ray generator arrangement, characterised by:

said X-ray generator arrangement comprising drive means for moving a part of said arrangement into contact with said wall;

said gondola being provided with a door which can be opened by the operator to enable said operator to position a photographic film on the wall at a vertical location opposite said X-ray generator arrangement;

said stabilising means comprising a U-shaped member, the sides of said U providing legs, said U-shaped member being mounted at the bottom end of said vertical guide rail and being provided with a pair of magnets one at the end of each leg, and wheel means mounted between said legs and operable by said operator to be moved to extended and withdrawn positions, the arrangement being such that in the withdrawn position of said wheel means,

said wheel means is not in engagement with the wall, whilst the magnets are in engagement with the wall thereby clamping the U-shaped member and therewith said guide rail and X-ray generator arrangement in fixed positions with respect to said wall, in which clamped condition an X-ray photograph is taken by said operator, and in the extended position, the wheel means forces said magnets out of engagement with said wall, thereby allowing movement of the assembly, together with the guide rail, the X-ray generator assembly and the U-shaped member by virtue of the fact that they are carried by said assembly, in a horizontal direction with respect to said wall.

In order that the present invention be more readily understood, an embodiment thereof will now be described by way of example with reference to the accompanying drawings, in which:—

Figure 1 is a front view showing an example of a metal tank;

Figure 2 is a partially enlarged front view of part of the tank shown in Figure 1;

Figure 3 is a side view showing a conventional X-ray photographic inspecting device for a weld;

Figure 4 is a side view showing the used state of a preferred embodiment of an X-ray photographic inspecting device according to this invention;

Figure 5 is a front view of the device shown in Figure 4;

Figure 6 is a plan view of the device shown in Figure 4; and

Figure 7 is a cross sectional view of the device taken along the line VII—VII in Figure 4.

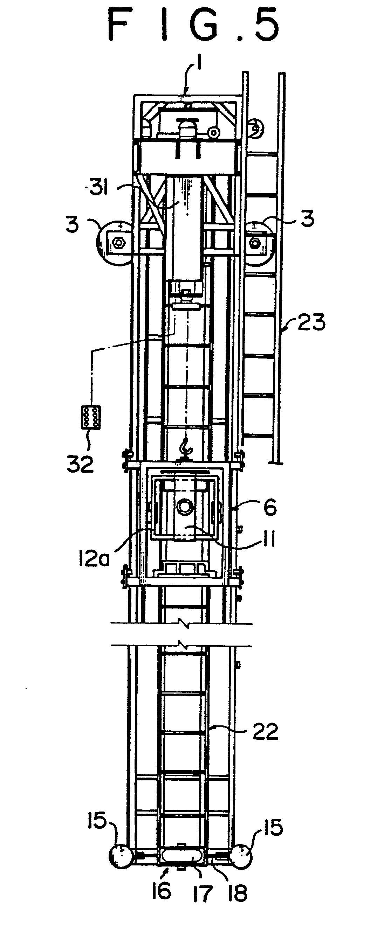

Referring now to Figures 4 to 7 of the drawings which show one preferred embodiment of the X-ray photographic inspecting device constructed according to this invention, like reference numerals designate the same parts in the respective views. A body 1 is assembled with suitable members made of steel or other metal in a framework of rectangular shape being long in lateral direction. The body 1 includes at least two wheels 3, 3 laterally journalled at an adequate interval in a longitudinal direction and movable along the upper edge 2a of a wall 2 to be inspected such as, for example, the wall of a tank or the like, which upper edge is used as a guide. A guide rail 4 is vertically installed on the body 1 so as, in use, to be along one side surface of the wall 2 to be inspected. A supporting leg 5 is laterally mounted at the lower end of the rail 4 for engagement with the wall 2 to be inspected. The body 1 is supported by the supporting leg 5 on the wall 2 to be inspected as indicated in Figure 4.

A X-ray generator 6 is mounted for movement up and down the guide rail 4 by means of rollers 7, 7 and is hung from an electric chain block 8 carried on the body 1. A plurality of limit switches 9, are movably adjustably mounted at a predetermined interval in a vertical direction, that is, at the length unit corresponding to the length of the vertical welds c indicated in Figure 2. The X-ray generator 6 is elevationally moved upwardly or downwardly by the chain block 8. When a sensor 10 mounted at the X-ray generator 6 makes contact with any of the limit switches 9, it senses the position and the X-ray generator 6 will stop at that position to allow the X-ray generator 6 to coincide with the vertical weld c to be inspected.

The X-ray generator 6 also includes a penetrameter support 12 for moving penetrameter 11 toward the wall 2 to be inspected at the side opposite to the surface of the wall 2 to be inspected, and a drive means 13 for driving the penetrameter support 12.

The penetrameter 11 serves to photograph or project a letter, symbol or the like on a film 14 in photographing the vertical weld c so as to judge whether the weld c may be preferably photographed or not. The penetrameter support 12 is supported via springs 12b interposed within a supporting frame 12a projected forwardly from the frame 6a of the X-ray generator 6. The drive means 13 for driving the penetrameter support 12 includes, for example a magnet, a motor-driven cylinder or the like. The drive means 13 is electrically connected to the limit switches 9, and operates in synchronism with the stopping of the X-ray generator 6 to urge the penetrameter 11 into intimate contact with the wall 2 to be inspected.

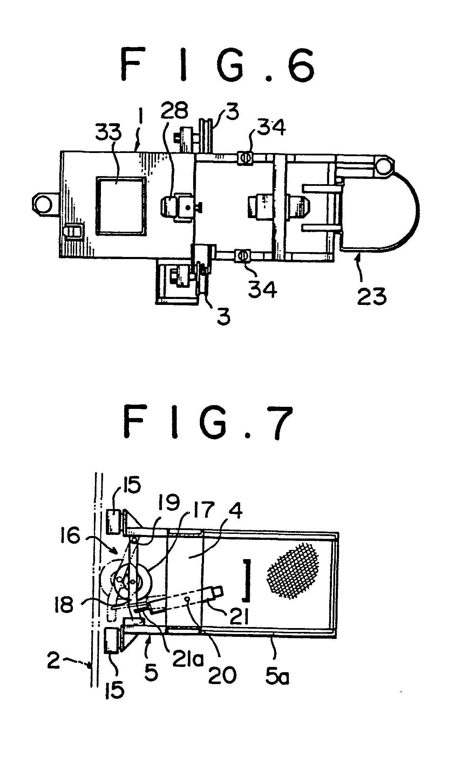

As evident from Figure 7, the supporting leg 5 is formed in substantially U shape in a horizontal plane. The leg 5 includes two leg frames 5a laterally fixed to the lower ends of the guide rail 4, and at least two magnets 15, 15 secured at an appropriate interval to the left and right front ends of the frames 5a. Thus, the body 1 is stably supported via two-fulcrum supports with the magnets 15, 15 on to the wall 2 to be inspected. The leg 5 also includes pushing means 16 with a wheel 17 for engagement with the wall 2 to be inspected and for pushing the bottom of the rail 4 away from the wall 2 to thereby separate the magnets 15, 15 from the wall 2 to be inspected.

The pushing means 16 with the wheel 17 is formed by pivotally securing an arm 18 to one of the leg frames 5a via a pivot 19. The wheel 17 is journalled to the arm 18 whose free end is connected to the output shaft 21a of a piston and cylinder device 21 pivotally secured at a pivot 20 to the frame 5a.

Thus, when the leg is secured by the magnets 15, 15 to the wall 2 to be inspected and the wall 2 and the piston and cylinder device 21 is driven to urge the wheel 17 to move forwardly through the arm 18, the fixture of the leg to the wall to be inspected can be broken as designated by two-dotted broken lines. Since the wheel 17 rolls on the surface of the wall 2 to be inspected when the leg 5 is not secured to the wall 2, the body 1 can be smoothly moved with respect to the wall 2 to be inspected.

Referring back to Figure 4, ladders 22 and 23 are vertically hung both inside and outside of the wall 2 to be inspected from the body 1 and are used for inspecting the welded parts on the wall 2 and adjusting respective parts. Further, a gondola 24 is elevationally movably driven up and down and is suspended by a wire 25 on the other side of the wall 2 from the X-ray generator 6.

The gondola 24 comprises at least a front wall 24a capable of preventing the transmission of an X-ray therethrough. Preferably, the wall 24a is made of lead and has an openable door 24b which may be securely closed by screws in order to ensure the safety of a worker or operator 26 on the gondola 24.

The gondola 24 is elevationally moved in synchronism with the elevational movement of the X-ray generator 6. The gondola 24 may be driven by the electric chain block 8 also used as the drive source of the X-ray generator 6 or may also be driven by using a wire winch (not shown) via a motor 27 carried on the body 1. In both cases, the gondola 24 is so set beforehand as to be elevationally driven in synchronism with the elevational movement of the X-ray generator 6.

As shown in Figure 4, the body 1 is movable along the top of the wall 2 by means including a motor 28 carried on the body 1, and a reduction gear 29 interlocked with the motor 28 and having a sprocket 29a, another sprocket 3a fixed to the shaft of the wheel 3 and a chain 30 wound around the sprockets 39a and 3a.

An operation panel 32 connected to a control unit 31 is disposed within the gondola 24. The respective drive sources can be energized or deenergized by operating the operation panel 32 thereby fixing the body 1 via the supporting leg 5 on the wall 2 to be inspected or releasing the fixture of the body 1, moving or stopping the body 1, elevationally moving the X-ray generator 6 and the gondola 24, pushing the penetrameter, and taking photograph of the X-ray and so forth as all the operations.

In Figures 4 to 6, reference numeral 33 designates a controller, and 34 a hanger.

When the wall 2 such as, for example, the wall of a metal tank indicated in Figure 2 is to be inspected by X-ray photography of the welds c using an X-ray photographic inspecting device thus constructed, a wire is first hung on the hangers 34, is then lifted by a crane or the like. Horizontally moving wheels 3 are then engaged with the upper edge 2a of the wall 2 to be inspected, and the X-ray photographic inspecting device of this invention is hung on the wall 2 to be inspected as indicated in Figure 4.

After the X-ray photographic inspecting device of this invention is thus hung, a worker or operator 26 will enter the gondola 24 through the door 24b utilizing the ladder 22. When the worker 26 then starts the motor 28 via the operation panel 32, the horizontally moving wheels 33 are rotated to cause the body 1 to be horizonally moved along the upper edge 2a of the wall 2, with the upper edge 2a used as a guide. Thus, the X-ray generator 6 is moved to coincide with the welds c on the wall 2 to be inspected.

If the wheel 17 is moved or pushed forwardly by the pushing means 16 at the bottom of the supporting leg 5 at this time, since the wheel 17 rolls on the surface of the wall 2 to be inspected, the body 1 can be smoothly horizontally moved.

After the body 1 is moved to a predetermined position, the operation panel 32 is utilized to cause the pushing means 16 to retract the wheel 17, and the magnets 15, 15 attach themselves to the metal wall 2 to be inspected. Accordingly, the body 1 is secured by the supporting leg 5 to the wall 2 to be inspected without lateral movement.

Then, the electric chain block 8 and the motor 27 are started using the operation panel 32 to cause the X-ray generator 6 and the gondola 24 to be elevationally moved and positioned to desired vertical weld c.

It should be noted that, since the limit switches 9 are disposed at the interval of the vertical welds c along the guide rail 4 in this case, the sensor 10 will make contact with any of the limit switches 9 to thus cause the electric chain block 8 to be stopped. Accordingly, the X-ray generator 6 is accurately positioned at a respective vertical weld c.

The drive means 13 of the penetrameter support 12 is energized using the operation panel 32, and penetrameter 11 is urged on to the surface of the wall 2 to be inspected, a film 14 is then bonded to the opposite side of the wall 2 to be inspected, and then the X-ray photograph is taken for that weld c.

The film 14 is bonded on to the wall 2 to be inspected by opening the door 24b from the interior of the gondola 24, and the X-ray photography is conducted using the operation panel 32 with the door 24b of the gondola 24 closed. Since at least the front surface of the gondola 24 is formed of lead, as is the openable door 24b, the worker within the gondolar is not contaminated by the X-ray irradiated upon photographing.

Then, the X-ray generator 6 and the gondola 24 are sequentially lowered or raised, and the respective vertical welds c can be photographed in the same manner as before.

After the respective vertical welds c are thus photographed in a single vertical row, the pushing means 16 of the supporting leg 5 is operated, and the wheel 17 is thus moved and pushed forwardly on to the wall 2 to be inspected to disengage the magnets 15, 15 from the surface of the wall 2. The motor 28 is then started, and the body 1 is laterally moved along the upper edge 2a of the wall 2 via the horizontally moving wheels 3, 3, and is stopped on the next column of vertical welds, and the same operations as described above will be sequentially conducted and the respective vertical welds c will be X-ray photographed.

It should be noted that, although the above embodiment is directed to the limit switches 9 used as the stopping means of the X-ray generator 6, the energizing time of the electric chain block 8 may be controlled and utilized for elevationally driving the X-ray generator 6.

It should be appreciated from the foregoing description that the X-ray photographic inspecting device is labour-saving and can improve working efficiency with safety.

While the inspection of vertical welds has been described in detail, it will be apparent that horizontal welds can also be inspected, if necessary by the inclusion of some form of horizontal movement control of the body 1 along the rim 2a of the wall.

## Claims

1. An X-ray photographic device for use in inspecting welds in a vertical wall (2) constructed from a plurality of plates which have been welded together along their edges, said device comprising:

a movable assembly (1) provided with means by which said assembly is supported on, and movable along, the upper horizontal edge of said wall;

a generally vertical guide rail (4) extending downwardly from said assembly on one side of said wall;

an X-ray generator arrangement (6) mounted to be movable up and down said guide rail, and suspended from said assembly (1) and comprising an X-ray generator for transmitting a beam of X-rays towards said wall;

a gondola (24) for supporting an operator, said gondola being suspended by cable means from said assembly (1) and being movable vertically with respect thereto, said gondola being on the other side of said wall from the X-ray generator arrangement (16); and

means (5) for stabilising the position of said X-ray generator arrangement, characterised by:

said X-ray generator arrangement comprising drive means (13) for moving a part of said arrangement into contact with said wall;

said gondola (24) being provided with a door which can be opened by the operator to enable said operator to position a photographic film (14) on the wall (2) at a vertical location opposite said X-ray generator arrangement;

said stabilising means comprising a U-shaped member (5), the sides of said U providing legs (5a), said U-shaped member being mounted at the bottom end of said vertical guide rail (4) and being provided with a pair of magnets (15) one at the end of each leg (5a), and wheel means (17, 18) mounted between said legs (5a) and operable by said operator to be moved to extended and withdrawn positions, the arrangement being such that in the withdrawn position of said wheel means, said wheel means is not in engagement with the wall, whilst the magnets (15) are in engagement with the wall (4) thereby clamping the U-shaped member and therewith said guide rail (4) and X-ray generator arrangement in fixed positions with respect to said wall, in which clamped condition an X-ray photograph is taken by said operator, and in the extended position, the wheel means forces said magnets out of engagement with said wall, thereby allowing movement of the assembly (1), together with the guide rail (4), the X-ray generator assembly (6) and the U-shaped member by virtue of the fact that they are carried by said assembly, in a horizontal direction with respect to said wall.

2. A device according to claim 1 wherein the wheel means (17, 18) is driven by a piston and cylinder device (21, 21a) which is attached to said U-shaped member (5), said piston and cylinder device being used to cause the wheel means (17, 18) to move towards and away from the wall (2).

3. A device according to claim 1 or 2 wherein the wheel means (17, 18) include a wheel (17) journalled on a pivotable arm (18), the wheel (17) being arranged to engage the wall (2) when the movable means (17, 18) is moved towards the wall (2).

4. A device according to claim 1, 2 or 3 wherein the guide rail (4) is provided with limit switches (9) along its length.

5. A device according to claim 4, wherein the limit switches (9) are movable for positioning along the guide rail (4) at predetermined positions.

**Patentansprüche**

1. Röntgenstrahl-Photovorrichtung zur Überprüfung von Schweißnähten in einer vertikalen Wand (2), welche aus einer Mehrzahl von Platten zusammengesetzt ist, welche entlang ihrer Ränder zusammengeschweißt sind, mit:

einer beweglichen Anordnung (1), welche mit einer Einrichtung versehen ist, durch welche die Anordnung auf und beweglich entlang des oberen horizontalen Randes der Wand gelagert ist;

einer im wesentlichen vertikalen Führungsschiene (4), die sich von der Anordnung auf einer Seite der Wand nach unten erstreckt;

einer Röntgenstrahl-Erzeugungsanordnung (6), die auf- und abwärts beweglich auf der Führungsschiene angeordnet ist und an der Anordnung (1) aufgehängt ist und einen Röntgenstrahlgenerator zum Aussenden eines Bündels von Röntgenstrahlen auf die Wand aufweist;

einer zum Tragen einer Bedienungsperson vorgesehenen Gondel (24), die mittels einer Kabeleinrichtung an der Anordnung (1) aufgehängt ist und vertikal bezüglich dieser beweglich ist, wobei die Gondel auf der anderen Seite der Wand bezüglich der Röntgenstrahl-Erzeugungsanordnung (16) angeordnet ist; und

einer Einrichtung (5) zum Stabilisieren der Position der Röntgenstrahl-Erzeugungsanordnung, dadurch gekennzeichnet,

daß der Röntgenstrahl-Erzeugungsanordnung eine Antriebseinrichtung (13) zum Bewegen eines Teiles der Anordnung in Kontakt mit der Wand aufweist;

daß die Gondel (24) mit einer Tür versehen ist, welche durch die Bedienungsperson geöffnet werden kann, damit die Bedienungsperson einen Photofilm (14) auf der Wand (2) an einer vertikalen Stelle gegenüber der Röntgenstrahl-Erzeugungsanordnung positionieren kann;

daß eine Stabilisierungseinrichtung ein U-förmiges Teil (5) aufweist, wobei die Seiten des U Schenkel (5a) bilden, wobei das U-förmige Teil am bodenseitigen Ende der vertikalen Führungsschiene (4) angeordnet ist und ein Paar Magneten (15) an jedem Ende jeden Schenkels (5a) aufweist, und wobei eine Radeinrichtung (17, 18) zwischen den Schenkeln (5a) angeordnet ist und von der Bedienungsperson in ausgefahrene und zurückgezogene Stellungen bewegt werden kann, wobei die Anordnung so ausgebildet ist, daß in der zurückgezogenen Stellung einer jeden Radanordnung diese sich nicht in Anlage an der Wand befindet, während die Magneten (15) in Anlage an der Wand (4) befindlich sind, wodurch das U-förmige Teil und damit die Führungsschiene (4) und die Röntgenstrahl-Erzeugungsanordnung in fixierten Stellungen bezüglich der Wand festgeklemmt sind, in welcher festgeklemmten Stellung ein Röntgenphoto von der Bedienungsperson aufgenommen wird, und wobei in der ausgefahrenen Stellung die Radeinrichtung die Magneten aus ihrer Anlagestellung an der Wand wegbewegt, wodurch sie der Anordnung (1) zusammen mit der Führungsschiene (4), der Röntgen-

.strahl-Erzeugungseinrichtung (6) und dem U-förmigen Teil dadurch eine Bewegung ermöglichen, daß sie von der Anordnung in horizontaler Richtung bezüglich der Wand getragen werden.

2. Vorrichtung nach Anspruch 1, dadurch gekennzeichnet, daß die Radeinrichtung (17, 18) durch eine Kolben- und Zylindervorrichtung (21, 21a) angetrieben wird, welche an dem U-förmigen Teil (5) befestigt ist, und welche dazu verwendet wird, die Radeinrichtung (17, 18) in Richtung auf und von der Wand (2) weg zu bewegen.

3. Vorrichtung nach Anspruch 1 oder 2, dadurch gekennzeichnet, daß die Radeinrichtung (17, 18) ein Rad (17) aufweist, welches an einem schwenkbaren Arm (18) gelagert ist, wobei das Rad (17) derart angeordnet ist, daß es auf der Wand (2) aufliegt, wenn die bewegliche Einrichtung (17, 18) auf die Wand (2) zubewegt wird.

4. Vorrichtung nach Anspruch 1, 2 oder 3, dadurch gekennzeichnet, daß die Führungsschiene (4) mit Endschaltern (9) entlang ihrer Länge versehen ist.

5. Vorrichtung nach Anspruch 4, dadurch gekennzeichnet, daß die Endschalter (9) zur Positionierung entlang der Führungsschiene (4) an vorbestimmten Stellen beweglich sind.

## Revendications

1. Dispositif radiographique destiné à l'inspection de soudures formées dans une paroi verticale (2) réalisée à partir de plusieurs plaques qui ont été soudées les unes aux autres le long de leurs bords, le dispositif comprenant
   un ensemble mobile (1) comprenant un dispositif grâce auquel ledit ensemble est supporté sur le bord horizontal supérieur de la paroi et est mobile le long de ce bord,
   un rail de guidage (4) sensiblement vertical, descendant dudit ensemble d'un premier côté de la paroi,
   un arrangement (6) comportant un générateur de rayons X, monté afin qu'il puisse se déplacer verticalement le long du rail de guidage et suspendu audit ensemble (1) et comprenant un générateur de rayons X destiné à émettre un faisceau de rayons X vers la paroi,
   une nacelle (24) de support d'un opérateur, la nacelle étant suspendue par un câble à l'ensemble (1) et étant mobile verticalement par rapport à l'ensemble, la nacelle se trouvant du côté de la paroi opposé à celui de l'arrangement (16) comprenant un générateur de rayons X, et
   un dispositif (5) de stabilisation de la position de l'arrangement comprenant un générateur de rayons X, caractérisé en ce que

l'arrangement comprenant un générateur de rayons X comporte un dispositif (13) d'entraînement destiné à déplacer une partie de l'arrangement au contact de la paroi,

la nacelle (24) a une porte qui peut être ouverte par l'opérateur afin que celui-ci puisse positionner un film photographique (14) sur la paroi (2) à un emplacement vertical opposé à celui de l'arrangement comprenant le générateur de rayons X, et

le dispositif de stabilisation comporte un organe (5) en U dont les côtés du U forment des branches (5a), cet organe en U étant monté à l'extrémité inférieure du rail vertical de guidage (4) et ayant deux aimants (15), un à l'extrémité de chaque branche (5a), et un dispositif à roue (17, 18) monté entre les branches et destiné à être commandé par l'opérateur afin qu'il soit déplacé vers des positions avancée et reculée, l'arrangement étant tel que, dans la position reculée du dispositif à roue, la roue n'est pas au contact de la paroi alors que les aimants (15) sont au contact de la paroi (4) et serrent l'organe en U et ainsi le rail de guidage (4) et l'arrangement comportant le générateur de rayons X en position fixe par rapport à la paroi, une radiographie étant prise par l'opérateur lorsque l'appareil est dans cette position de serrage, et tel que, dans la position avancée, le dispositif à roue écarte les aimants du contact de la paroi, permettant ainsi le déplacement dudit ensemble (1), avec le rail de guidage (4), l'arrangement (6) comprenant le générateur de rayons X et l'organe en U, étant donné qu'ils sont portés par ledit ensemble, en direction horizontale par rapport à la paroi.

2. Dispositif selon la revendication 1, dans lequel le dispositif à roue (17, 18) est commandé par un vérin (21, 21a) fixé à l'organe en U (5), le vérin étant utilisé de manière qu'il rapproche le dispositif à roue (17, 18) de la paroi (2) ou qu'il l'en éloigne.

3. Dispositif selon l'une des revendications 1 et 2, dans lequel le dispositif à roue (17, 18) comporte une roue (17) qui tourillonne sur un bras pivotant (18), la roue (17) étant destinée à être au contact de la paroi (2) lorsque le dispositif mobile (17, 18) est déplacé vers la paroi (2).

4. Dispositif selon l'une des revendications 1, 2 et 3, dans lequel le rail de guidage (4) comporte des commutateurs de limite (9) placés sur sa longueur.

5. Dispositif selon la revendication 4, dans lequel les commutateurs de limite (9) sont mobiles afin qu'ils puissent être positionnés le long du rail de guidage (4) à des positions prédéterminées.

# F I G.1

# F I G.2

# F I G.3

1

# F I G .4

# F I G . 5

# F I G . 6

# F I G . 7